# EUROPÄISCHE PATENTANMELDUNG

(11) **EP 0 976 596 A1**
(43) Veröffentlichungstag der Anmeldung: **02.02.2000**
(21) Anmeldenummer: 99114585.5
(22) Anmeldetag: 26.07.1999
(51) Int. Cl.: B60J 10/12

(54) **Öffnungsfähiges Fahrzeugdach mit Einklemmschutz**

(30) Priorität: 28.07.1998 DE 19833811
(71) Anmelder: WEBASTO KAROSSERIESYSTEME GmbH, D-82131 Stockdorf (DE)
(72) Erfinder: Lindinger, Franz, 80638 München (DE)
(74) Vertreter: Wiese, Gerhard

(57) **Zusammenfassung**

Die Erfindung betrifft ein Fahrzeugdach, das einen eine Öffnung (12) in einer festen Dachhaut (10) verschließenden Deckel (14), der verschiebbar ist, um die Öffnung mindestens teilweise freizugeben, sowie ein Dichtungselement (24) aufweist, das dachfest angebracht ist und bei geschlossenem Deckel von unten im Bereich der Deckelvorderkante (32) anliegt, um den Fahrzeuginnenraum (34) abzudichten. In das Dichtungselement ist ferner ein Sensor (40) integriert, der das Überschreiten eines Schwellwerts der Krafteinwirkung auf den Sensor erfaßt, um das Einklemmen eines Gegenstands zwischen Deckelvorderkante und vorderem Öffnungsrand (18) zu erfassen. Der Deckel (14) ist wenigstens teilweise transparent. Außerdem ist ein verschiebbarer Himmel (16) vorgesehen, der unterhalb der Dachöffnung (12) angeordnet ist um die Dachöffnung abzudecken oder mindestens teilweise freizugeben. Der Sensor (40) ist so angeordnet und ausgebildet, um auch ein Einklemmen eines Gegenstands zwischen der Himmelvorderkante (42) und dem vorderem Öffnungsrand (18) zu erfassen.

## Beschreibung

Die Erfindung betrifft ein Fahrzeugdach mit einem eine Öffnung in einer festen Dachhaut verschließenden Deckel, der verschiebbar ist, um die Öffnung mindestens teilweise freizugeben, sowie einem Dichtungselement, das dachfest angebracht ist und bei geschlossenem Deckel von unten im Bereich der Deckelvorderkante anliegt, um den Fahrzeuginnenraum abzudichten, und in das ferner ein Sensor integriert ist, der das Überschreiten eines Schwellwerts der Krafteinwirkung auf den Sensor erfaßt, um das Einklemmen eines Gegenstands zwischen Deckelvorderkante und vorderem Öffnungsrand zu erfassen.

Eine solches gattungsgemäßes Fahrzeugdach ist aus DE 37 06 450 C2 bekannt. Dabei handelt es sich um ein Schiebedach ohne verschiebbaren Himmel. Das Dichtungselement, das auf einem in die Dachöffnung ragenden feststehenden Dachteil montiert ist, ist zweiteilig aufgebaut, wobei der Sensor als luftgefüllter Schlauch ausgebildet ist, dessen Druck erfaßt wird. Der Schlauch ist über eine entsprechende in Querrichtung verlaufende Ausnehmung in das Dichtungselement eingeschoben, das für die Dichtungsfunktion einen zusätzlichen Luftschlauch aufweist. An dem Rand der Dachöffnung ist eine zusätzliche Dichtung angebracht, welche bei geschlossenem Deckel frontal an der Deckelvorderkante anliegt und für die Dichtungsfunktion ebenfalls einen in Querrichtung verlaufenden Luftschlauch aufweist.

Nachteilig bei diesem Fahrzeugdach ist, daß keine wahlweise Veränderung des Lichteinfalls bei geschlossenem Deckel möglich ist.

Aus US 5 592 060 ist ein Fahrzeugdach bekannt, das einen eine Öffnung in einer festen Dachhaut verschließenden Deckel, der verschiebbar ist, um die Öffnung mindestens teilweise freizugeben, und mit der Hinterkante in eine Lüftungsstellung ausschwenkbar ist, sowie ein Dichtungselement umfaßt, das an der Stirnseite der Deckelvorderkante angebracht ist und bei geschlossenem Deckel an dem Öffnungsrand anliegt, um den Fahrzeuginnenraum abzudichten. In das Dichtungselement ist ein Sensor mit zwei gegenüberliegenden Elektroden integriert, der das Überschreiten eines Schwellwerts der Krafteinwirkung auf den Sensor dadurch erfaßt, daß dann die Elektroden durch Deformation in Kontakt kommen, um das Einklemmen eines Gegenstands zwischen Deckelvorderkante und Öffnungsrand zu erfassen. Ferner ist ein verschiebbarer Himmel vorgesehen, der unterhalb der Dachöffnung angeordnet ist, um die Dachöffnung abzudecken oder mindestens teilweise freizugeben.

Bei disem Fahrzeugdach ist nachteilig, daß durch die Anbringung des Dichtungselements an Deckel die bewegte Masse des Deckels vergrößert wird und die Dicke des Deckels an seiner Vorderkante erhöht wird, sowie daß kein Einklemmschutz bezüglich des Schiebehimmels gegeben ist.

Es ist Aufgabe der vorliegenden Erfindung, ein Fahrzeugdach zu schaffen, welches auch in geschlossenem Zustand einen wahlweise veränderlichen Lichteinfall erlaubt, auf einfache Weise eine gute Abdichtung des Fahrzeuginnenraums erzielt und zugleich einen umfassenden Einklemmschutz gewährleistet.

Diese Aufgabe wird ausgehend von einem Fahrzeugdach der eingangs genannten Art erfindungsgemäß dadurch gelöst, daß der Deckel wenigstens teilweise transparent ist, daß ein motorisch verschiebbarer Himmel vorgesehen ist, der unterhalb der Dachöffnung angeordnet ist, um die Dachöffnung abzudecken oder mindestens teilweise freizugeben, und daß ferner der Sensor so angeordnet und ausgebildet ist, um auch ein Einklemmen eines Gegenstands zwischen der Himmelvorderkante und dem vorderen Öffnungsrand zu erfassen.

Bei dieser erfindungsgemäßen Lösung ist vorteilhaft, daß durch Betätigung des Schiebehimmels der Lichteinfall auch bei geschlossenem Deckel verändert werden kann und auf einfache Weise ohne zusätzliche Elemente ein Einklemmschutz auch für die Betätigung des Schiebehimmels gewährleistet ist.

In vorteilhafter Ausgestaltung der Erfindung ist vorgesehen, daß der Deckel mit der Hinterkante in eine Lüftungsstellung ausschwenkbar ist, wobei das Dichtungselement so ausgebildet und angeordnet ist, daß es auch bei nicht zurückgeschobenem, jedoch ausgeschwenktem Deckel von unten dichtend im Bereich der Deckelvorderkante anliegt. Dies hat den Vorteil, daß auch in der Lüftungsstellung die Windgeräusche in Fahrzeuginnenraum vermindert sind.

In bevorzugter Ausführung der Erfindung ist ferner vorgesehen, daß ein an dem vorderen Rand der Dachöffnung angeordneter Windabweiser vorgesehen ist, der bei geöffnetem Deckel selbsttätig ausschwenkbar ist, wobei das Dichtungselement so ausgebildet ist, daß es bei geschlossenem bzw. nicht zurückgeschobenem, jedoch ausgeschwenktem Deckel derart mit dem Windabweiser in Eingriff steht, daß ein Klappern des Windabweisers verhindert wird. Dadurch wird auf einfache Weise ohne zusätzliche Elemente eine Beeinträchtigung der Fahrzeuginsassen im Fahrbetrieb bei nicht ausgestelltem Windabweiser verringert.

Vorzugsweise weist das Dichtungselement in seinem vorderen Bereich eine nach oben abstehende Dichtungslippe auf die bei geschlossenem Deckel von unten an dem Windabweiser anliegt. Dies stellt eine besonders einfache Realisierung der Dichtungsfunktion des Dichtungselements dar.

In weiterer vorteilhafter Ausgestaltung weist das Dichtungselement in seinem hinteren Bereich einen Wulstbereich mit einem Hohlraum auf, in welchem sich in Fahrzeugquerrichtung erstreckend der Sensor angeordnet ist. Dies stellt eine einfache Ausführung mit guter Funktionssicherheit dar.

Weitere bevorzugte Ausgestaltungen der Erfindung ergeben sich aus den Unteransprüchen.

Im folgenden sind zwei Ausführungsformen der Erfindung anhand der beiliegenden Zeichnungen näher erläutert. Es zeigen:
- FIG.1: eine schematische Aufsicht auf eine erste Ausführungsform eines erfindungsgemäßen Fahrzeugdaches;
- FIG. 2: einen Längsschnitt des Fahrzeugdaches von FIG. 1 entlang der Linie II-II, wobei jedoch Deckel und Himmel in einer anderen Stellung als in FIG. 1 gezeigt sind; und
- FIG. 3: eine Darstellung ähnlich zu FIG. 2, wobei jedoch eine zweite Ausführungsform dargestellt ist.

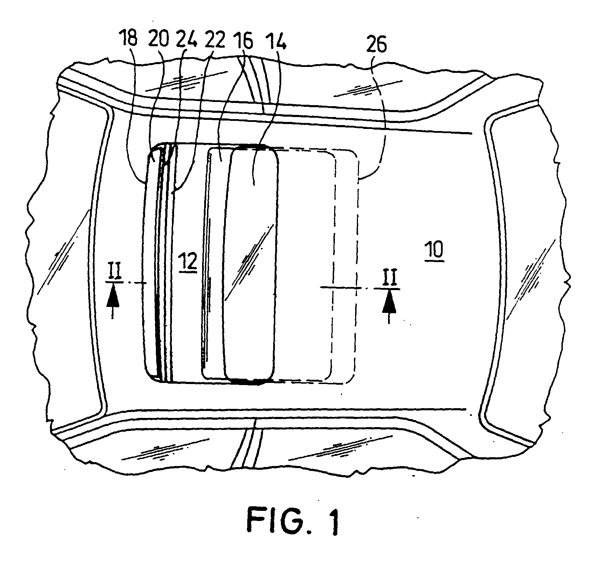

Die Bezeichnung vorn und hinten bezieht sich auf die normale Fahrtrichtung. Unter Bezugnahme auf FIG. 1 ist in einer festen Dachhaut 10 eine Dachöffnung 12 ausgebildet, welche von einem transparenten Deckel 14, z.B. aus Glas, verschließbar ist. Der Deckel 14 ist in Fahrzeuglängsrichtung verschiebbar, um die Dachöffnung 12 wahlweise zum Teil oder ganz freizugeben, und er ist ferner mit seiner Hinterkante 26 ausgehend von der Schließstellung in Lüftungsstellungen ausschwenkbar. Unterhalb des Deckels 14 ist ein Himmel 16 angeordnet, der in seiner Schließstellung die Dachöffnung 12 verdeckt und in Fahrzeuglängsrichtung verschiebbar ist, um die Dachöffnung bei geschlossenem oder ausgeschwenkten Deckel 14 wahlweise teilweise oder ganz freizugeben. Der Antrieb und die Steuerung des Deckels 14 und des Himmels 16 erfolgt in an sich z.B. aus DE 195 13 971 C2 bekannter Weise. In FIG. 1 sind der Deckel 14 und der Himmel 16 jeweils in einer Teilöffnungsstellung dargestellt.

Am vorderen Rand 18 der Dachöffnung 12 ist ein Windabweiser 20 angeordnet, der bei zurückgeschobenem Deckel 14 aufgrund einer federnden Vorspannung selbsttätig mit seiner Hinterkante nach oben ausschwenkt, um durch Turbulenzen an dem vorderen Öffnungsrand 18 verursachte Fahrtwindgeräusche zu verringern.

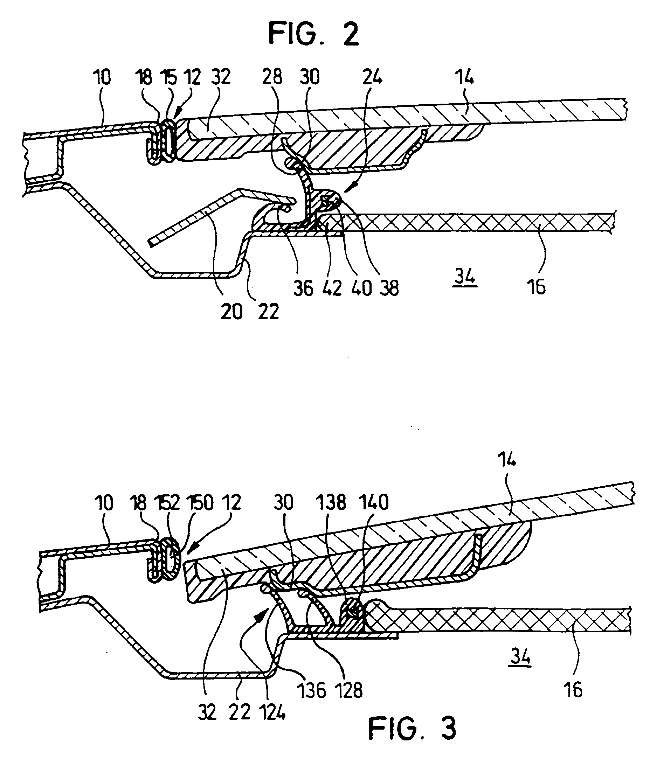

FIG. 2 zeigt eine Schnittansicht entlang der Linie II-II von FIG. 1, wobei jedoch der Deckel 14 und der Himmel 16 jeweils in Schließstellung dargestellt sind. Am vorderen Rand 18 der Dachöffnung 12 ist eine Dichtung 15 vorgesehen, an der der Deckel 14 in Schließstellung mit seiner Vorderkante 32 anliegt. Alternativ dazu kann die Dichtung 15 statt am Rand der Dachöffnung 12 auch am Deckel 14 angeordnet sein. Auf einem feststehend an der Dachhaut 10 montierten Dachteil 22, das von vorn in die Dachöffnung 12 hineinragt, ist ein sich in Fahrzeugquerrichtung erstreckendes zweiteiliges Dichtungselement 24 montiert, das eine nach oben abstehende Dichtungslippe 28 aufweist, die von unten her dichtend an der nur ausgeschwenkten Deckel 14, d.h. bei nicht zurückgeschobenem Deckel 14, die Deckelvorderkante 32 zum Fahrzeuginnenraum 34 hin zusätzlich abzudichten, insbesondere um an dem vorderen Öffnungsrand 18 erzeugte Fahrtwindgeräusche im Fahrzeuginnenraum 34 zu vermindern. Im vorderen Bereich des Dichtungselements 24 ist eine weitere Dichtungslippe 36 vorgesehen, die bei niedergedrücktem Windabweiser 20, d.h. bei nicht zurückgeschobenem Deckel 14, von unten an dem hinteren Ende des Windabweisers 20 anliegt, um Klappergeräusche des Windabweisers 20 zu verhindern. Der Himmel 16 liegt in seiner Schließstellung mit seiner Vorderkante 42 an dem hinteren Bereich des Dichtungselements 24 an.

Im hinteren Bereich des Dichtungselements 24 ist als separates Teil ein elastischer Wulstbereich 38 mit einem Hohlraum vorgesehen, in welchem sich in Fahrzeugquerrichtung erstreckend ein Einklemmschutz-Sensor 40 angeordnet ist. Dieser arbeitet als Drucksensorik mittels Widerstandsmessung und ist über die ganze Breite des vorderen Öffnungsrands 18 ausgebildet. Der Sensor 40 ist oberhalb des Himmels 16 zwischen Himmel 16 und Deckelunterseite 30 angeordnet und so ausgebildet, daß bei Überschreiten eines Schwellwerts der Krafteinwirkung auf den Wulstbereich 38 und damit auf den Sensor 40 ein Signal erzeugt wird, das die nicht dargestellte Antriebssteuereinheit veranlaßt, den Schließvorgang des Deckels 14 und des Himmels 16 abzubrechen und den Antrieb zu reversieren, um die Dachöffnung 12 möglichst schnell wieder freizugeben. Dieser Fall kann eintreten, wenn ein Körperteil eines Fahrzeuginsassen oder ein sonstiger Gegenstand zwischen den vorderen Dachöffnungsrand 18 und die Deckelvorderkante 32 bzw. Himmelvorderkante 42 gerät. Dieser Fall kann auch dann eintreten, wenn bei geschlossenem oder nur ausgeschwenktem Deckel 14 nur der Himmel 16 geschlossen wird. Auch in diesem Fall bietet der Sensor 40 einen Einklemmschutz.

Das Dichtungselement 24 ist vorzugsweise aus EPDM oder ähnlichem Material gefertigt, wobei für den Wulstbereich 38 und die Dichtungslippen 28, 36 unterschiedliche Härten bzw. Materialien verwendet werden können (z.B. extrudiertes Thermoplast im Fußbereich).

Das Dichtungselement 24 erfüllt somit zugleich folgende Funktionen: Abdichtung des Fahrzeuginnenraums 34 bei geschlossenem oder nur ausgeschwenktem Deckel 14 bezüglich der Deckelvorderkante 32; Erfassen einer Einklemmsituation sowohl bezüglich des Deckels 14 als auch des Himmels 16; sowie Unterbinden von Klappergeräuschen des Windabweisers 20 bei geschlossenem oder nur ausgeschwenktem Deckel 14.

In FIG. 3 ist eine zweite Ausführungsform der Erfindung mit ausgeschwenktem Deckel 14 dargestellt, die sich von der ersten Ausführungsform gemäß FIG. 1 und 2 vor allem dadurch unterscheidet, daß kein Windabweiser vorgesehen ist und das Dichtungselement 124 anders ausgebildet ist.

An dem vorderen Dachöffnungsrand 18 ist eine einen in Querrichtung verlaufenden Hohlraum 150 aufweisende Dichtung 152 aus elastischem Material angebracht, welche bei geschlossenem Deckel 14 zwischen der Deckelvorderkante 32 und dem vorderen Dachöffnungsrand 18 liegt, um den Fahrzeuginnenraum 34 abzudichten. Die Dichtung 152 sorgt dabei neben dem Dichtungselement 124 zusätzlich für eine Abdichtwirkung für den Fahrzeuginnenraum 34.

Das Dichtungselement 124 ist einstückig ausgebildet, wobei im vorderen Bereich zwei im wesentlichen parallel nach oben abstehende Dichtungslippen 128 und 136 vorgesehen sind, die bei geschlossenem bzw. nur ausgeschwenktem Deckel 14 jeweils an der Unterseite 30 des Deckels 14 anliegen und für eine doppelte Dichtwirkung sorgen. Der Wulstbereich 138 des Dichtungselements 124, der einen Einklemmsensor 140 enthält, ist gegenüber dem Wulstbereich 38 gemäß FIG. 2 um 90 Grad gedreht und liegt direkt auf dem feststehenden Dachteil 22 auf. Der Sensor 140 liegt in etwa in der Ebene des Himmels 16, dessen Vorderkante in Schließstellung an dem Wulstbereich 138 anliegt. Der Sensor 140 ist analog zum Sensor 40 ausgebildet.

Die Erfindung ist nicht auf Schiebe-Hebe-Dächer beschränkt, sondern kann z.B. auch bei reinen Schiebedächern, Faltdächern, Lamellendächern oder Spoilerdächern verwendet werden. Der Begriff "Deckel" ist allgemein zu verstehen und kann insbesondere auch mehrteilige Abdeckungselemente umfassen.

Das Dichtungselement 124 ist vorzugsweise ebenfalls aus EPDM ausgebildet.

### Bezugszeichenliste

- Dachhaut: **10**
- Dachöffnung: **12**
- Deckel: **14**
- Dichtung: **15**
- Schiebehimmel: **16**
- vorderer Rand von 12: **18**
- Windabweiser: **20**
- feststehendes Dachteil: **22**
- Dichtungselement: **24, 124**
- Hinterkante von 14: **26**
- Dichtungslippen: **28, 36, 128, 136**
- Unterseite von 14: **30**
- Vorderkante von 14: **32**
- Fahrzuginnenraum: **34**
- Wulstbereich von 24 bzw. 124: **38, 138**
- Einklemmschutzsensor: **40, 140**
- Vorderkante von 16: **42**
- Hohlraum in 152: **150**
- Dichtung: **152**

## Patentansprüche

1. Fahrzeugdach mit einem eine Öffnung (12) in einer festen Dachhaut (10) verschließenden Deckel (14), der verschiebbar ist, um die Öffnung mindestens teilweise freizugeben, sowie einem Dichtungselement (24, 124), das dachfest angebracht ist und bei geschlossenem Deckel von unten im Bereich der Deckelvorderkante (32) anliegt, um den Fahrzeuginnenraum (34) abzudichten, und in das ferner ein Sensor (40, 140) integriert ist, der das Überschreiten eines Schwellwerts der Krafteinwirkung auf den Sensor erfaßt, um das Einklemmen eines Gegenstands zwischen Deckelvorderkante und vorderem Öffnungsrand (18) zu erfassen, **dadurch gekennzeichnet,** daß der Deckel (14) wenigstens teilweise transparent ist, daß ein verschiebbarer Himmel (16) vorgesehen ist, der unterhalb der Dachöffnung (12) angeordnet ist, um die Dachöffnung abzudecken oder mindestens teilweise freizugeben, und daß ferner der Sensor (40, 140) so angeordnet und ausgebildet ist, um auch ein Einklemmen eines Gegenstands zwischen der Himmelvorderkante (42) und dem vorderem Öffnungstand (18) zu erfassen.

2. Fahrzeugdach nach Anspruch 1, **dadurch gekennzeichnet,** daß der Deckel (14) mit der Hinterkante (26) in eine Lüftungsstellung ausschwenkbar ist, wobei das Dichtungselement (24, 124) so ausgebildet und angeordnet ist, daß es auch bei nicht zurückgeschobenem, jedoch ausgeschwenktem Deckel von unten dichtend im Bereich der Deckelvorderkante (32) anliegt.

3. Fahrzeugdach nach Anspruch 1 oder 2, **dadurch gekennzeichnet,** daß ein an dem vorderen Rand (18) der Dachöffnung (12) angeordneter Windabweiser (20) vorgesehen ist, der bei geöffnetem Deckel (14) selbsttätig ausschwenkbar ist, wobei das Dichtungselement (24) so ausgebildet ist, daß es bei geschlossenem bzw. nicht zurückgeschobenem, jedoch ausgeschwenktem Deckel derart mit dem Windabweiser in Eingriff steht, daß ein Klappern des Windabweisers verhindert wird.

4. Fahrzeugdach nach Anspruch 3, **dadurch gekennzeichnet,** daß das Dichtungselement (24) in seinem vorderen Bereich eine nach oben abstehende Dichtungslippe (36) aufweist, die bei geschlossenem Deckel (14) von unten an dem Windabweiser (20) anliegt.

5. Fahrzeugdach nach Anspruch 4, **dadurch gekennzeichnet,** daß das Dichtungselement (24) ferner eine sich nach oben erstreckende Dichtungslippe (28) zur Anlage an dem Deckel (14) aufweist.

6. Fahrzeugdach nach Anspruch 1 bis 4, **dadurch gekennzeichnet,** daß das Dichtungselement (124) zwei sich nach oben erstreckende, hintereinander angeordnete Dichtungslippen (128, 136) zur Anlage an dem Deckel (14) aufweist.

7. Fahrzeugdach nach einem der vorhergehenden Ansprüche, **dadurch gekennzeichnet,** daß es sich bei dem Sensor (40, 140) um einen Drucksensor mittels Widerstandsmessung handelt.

8. Fahrzeugdach nach einem der vorhergehenden Ansprüche**, dadurch gekennzeichnet,** daß das Dichtungselement (24, 124) in seinem hinteren Bereich einen Wulstbereich (38, 138) mit einem Hohlraum aufweist, in welchem sich in Fahrzeugquerrichtung erstreckend der Sensor (40, 140) angeordnet ist.

9. Fahrzeugdach nach einem der vorhergehenden Ansprüche, **dadurch gekennzeichnet,** daß der Sensor (40) oberhalb des Himmels (16) angeordnet ist.

10. Fahrzeugdach nach einem der vorhergehenden Ansprüche, **dadurch gekennzeichnet,** daß der Himmel (16) in seiner Schließstellung mit seiner Vorderkante (42) an dem Dichtungselement (24, 124) anliegt oder bis auf wenige Millimeter Restspalt zufährt.

11. Fahrzeugdach nach einem der vorhergehenden Ansprüche, **dadurch gekennzeichnet,** daß das Dichtungselement (24, 124) aus EPDM gefertigt ist.

12. Fahrzeugdach nach einem der vorhergehenden Ansprüche**, dadurch gekennzeichnet,** daß das Dichtungselement (24, 124) auf einem in die Dachöffnung (12) von vorn hineinragenden, an der Dachhaut (10) montierten feststehenden Dachteil (22) montiert ist.

13. Fahrzeugdach nach einem der vorhergehenden Ansprüche, **dadurch gekennzeichnet,** daß eine zusätzliche Dichtung (152) vorgesehen ist, die bei geschlossenem Deckel (14) zwischen Deckelvorderkante (32) und vorderem Öffnungsrand (18) liegt, um den Fahrzeuginnenraum (34) zusätzlich abzudichten.
